# EUROPEAN PATENT APPLICATION

(11) **EP 4 636 925 A1**
(43) Date of publication of application: **22.10.2025**
(21) Application number: 24171199.3
(22) Date of filing: 19.04.2024
(51) Int. Cl.: H01M 50/367, H01M 50/204, H01M 50/209, H01M 50/342

(54) **BATTERY HOUSING WITH VENTING CHANNEL COMPRISING GAS GUIDING ARRANGEMENT**

(71) Applicant: VOLVO TRUCK CORPORATION, 405 08 Göteborg (SE)
(72) Inventor: MOVAGHAR, Amirreza, 412 76 GÖTEBORG (SE); KHOSHAB, Masih, 441 65 ALINGSÅS (SE); BHAVANI SHANKAR, Vijai Shankar, 414 78 GÖTEBORG (SE); ROUT, Dhirendra, 422 54 GÖTEBORG (SE)
(74) Representative: Kransell & Wennborg KB

(57) **Abstract**

A battery housing (100) comprising: a battery module (102) comprising at least one battery cell (104), the battery cell having a vent (106) for venting gas in case of thermal runaway; a vent channel (108) located between the battery module and an outer wall (110) of the battery housing and configured to fluidly connect the vent to an opening (112) in the outer wall of the battery housing; and a curved convex surface (114) located in the vent channel between the vent and the opening, wherein the curved convex surface is configured to invoke the Coanda effect in a gas flowing past the curved convex surface.

## Description

### TECHNICAL FIELD

The disclosure relates generally to a battery housing. In particular aspects, the disclosure relates to a venting channel in a battery housing for an energy storage system which for example may be used in an electrical or hybrid vehicle. The disclosure can be applied to heavy-duty vehicles, such as trucks, buses, and construction equipment, among other vehicle types. The described battery housing may also be used for marine vessels and/or for stationary implementations, such as in a building and/or any stationary machinery. Although the disclosure may be described with respect to a particular implementation, the disclosure is not restricted to a particular vehicle.

### BACKGROUND

Thermal runaway in battery packs for vehicles refers to a chain reaction of escalating heat generation within the battery cells. This process can be triggered by factors like overcharging, internal short circuits, physical damage, etc. As the temperature rises, it can lead to a chain reaction, causing cells to heat up rapidly, potentially leading to gas and particle release. Managing this runaway reaction is important to prevent severe damage to the battery pack, vehicle, and surrounding environment.

In the event of a thermal runaway, efficient management of hot gases and particles within the battery pack may prevent rapid thermal spread. Strategically designed chimneys within the pack are utilized to guide and channel hot gases and to trap particles, ensuring controlled pathways that inhibit thermal propagation and limit the acceleration of the runaway process. Vents positioned within the pack are set to open at specific pressures, enabling the release of accumulated hot gases. Meanwhile, trapping mechanisms are deployed at designated locations within the pack to contain and prevent particles from exiting. This containment mitigates the risk of these particles igniting external gases, reducing potential hazards outside the battery pack. Accordingly, it is desirable to provide improved battery housing designs for mitigating damage caused by a thermal runaway event.

### SUMMARY

According to a first aspect of the disclosure, there is provided a battery housing comprising: a battery module comprising at least one battery cell, the battery cell having a vent for venting gas in case of thermal runaway; a vent channel located between the battery module and an outer wall of the battery housing and configured to fluidly connect the vent to an opening in the outer wall of the battery housing; and a curved convex surface located in the vent channel between the vent and the opening, wherein the curved convex surface is configured to invoke the Coanda effect in a gas flowing past the curved convex surface.

A technical advantage of the described battery housing may include improved control of evacuation of gases and particles generated during a thermal runaway event, providing increased safety and thermal stability. The arrangement of a curved convex surface, which also may be referred to as a Coanda surface, which connects the vent of a battery cell to an opening in the outer wall of the housing improves the venting efficiency by guiding a gas flow towards the opening.

Furthermore, the use of the Coanda effect in a battery housing can be easily integrated into various battery modules, making it adaptable to different battery sizes and battery types. The curved convex surface not only guides gases away from sensitive areas but can potentially also be used to captures particles, thereby combining gas and particle management in a straightforward design.

Optionally in some examples, including in at least one preferred example, the curved convex surface is located at an edge of the battery module. A technical benefit may include enhancing the guidance of vented gases and particles along a predefined path, reducing the likelihood of uncontrolled spread within the battery housing. Thereby, the gas flow can be controllably guided around the edge of the battery module towards the opening of the battery housing.

Optionally in some examples, including in at least one preferred example, the curved convex surface extends outside of an edge of the battery module. A technical benefit may include increasing the surface area available for invoking the Coanda effect, thereby improving the efficiency of gas and particle guidance and also providing an additional degree of freedom in how the direction of the gas flow is controlled.

Optionally in some examples, including in at least one preferred example, the curved convex surface is formed by a ledge arranged on the battery housing and extending outside of an edge of the battery module. A technical benefit may include providing a structural feature that can effectively redirect gas flow while also serving as a physical barrier against particle spread, enhancing the overall safety of the battery system.

Optionally in some examples, including in at least one preferred example, the curved convex surface is located at an upper portion of the battery module, and wherein the opening of the battery housing is located vertically below the convex surface so that the vent channel forms a curved path from the vent of the battery cell to the opening of the battery housing. A technical benefit may include facilitating a gravity-assisted flow of gases and particles, which helps in more efficient evacuation and minimizes the risk of gas and particle accumulation in critical areas.

Optionally in some examples, including in at least one preferred example, the vent channel passes an upper inner corner of the battery housing. A technical benefit may include optimizing the use of available space within the battery housing for gas evacuation paths, thereby improving the effectiveness of venting mechanisms without compromising the compactness or structural integrity of the battery system.

Optionally in some examples, including in at least one preferred example, the curved convex surface is part of a busbar cover structure arranged to cover a busbar of the battery module. A technical benefit may include integrating the gas guiding functionality with existing battery components, thereby minimizing additional parts and maintaining the compactness of the battery module design.

Optionally in some examples, including in at least one preferred example, the vent channel further comprises a vortex generator located in the vent channel prior to the curved convex surface so that a gas flow passes the vortex generator before reaching the curved convex surface. A technical benefit may include enhancing the Coanda effect by stabilizing the flow and improving the efficiency of gas redirection, leading to better control over vented substances. Moreover, the vortex generator helps the gas flow to stay attached to the curved convex surface, thereby causing particles to get trapped in the wake created after the vortex generator.

Optionally in some examples, including in at least one preferred example, the vortex generator comprises protruding elements in the vent channel. A technical benefit may include creating localized turbulence that aids in trapping particles within the vent channel, thus preventing their deposition on sensitive components.

Optionally in some examples, including in at least one preferred example, a height of the protruding elements is approximately similar to a maximum particle size ejected from the battery cell in case of thermal runaway. A technical benefit may include optimizing the design of the vortex generator for maximum particle trapping efficiency, tailored to the specific size distribution of particles produced during thermal runaway.

Optionally in some examples, including in at least one preferred example, a height of the protruding elements is in the range of 0.1 mm to 4 mm. A technical benefit may include providing a range of dimensions for the protruding elements to accommodate different particle sizes and flow rates, enhancing the versatility of the vortex generator to handle various thermal runaway scenarios.

Optionally in some examples, including in at least one preferred example, the battery housing further comprises a ridge located prior to the curved convex surface and arranged transversally to a gas flow direction. A technical benefit may include creating an additional barrier and redirection point for the gas flow, further enhancing the control over gas and particle movement within the vent channel. In particular, a low pressure vortex forms behind the ridge, promoting guiding the gas flow towards the curved convex surface.

Optionally in some examples, including in at least one preferred example, the ridge is located adjacent to the curved convex surface. A technical benefit may include a more seamless integration of flow redirection features, minimizing turbulence and potential gas flow backpressure, thereby potentially enhancing the efficiency of gas evacuation.

Optionally in some examples, including in at least one preferred example, the curved convex surface is made from a plastic material with high thermal resistance. A technical benefit may include ensuring the durability and longevity of the Coanda surface under high-temperature conditions, preserving its functionality and structural integrity during and after thermal runaway events.

Optionally in some examples, including in at least one preferred example, the curved convex surface has a surface roughness configured to enhance the Coanda effect. A technical benefit may include fine-tuning the fluid dynamics at the surface to maximize the adherence of gas flows, thereby improving the precision of gas and particle guidance.

Optionally in some examples, including in at least one preferred example, the curved convex surface has a coating having a surface roughness configured to enhance the Coanda effect. A technical benefit may include the ability to modify or retrofit existing battery housing components with a surface treatment that improves their performance in gas and particle management during thermal runaway, offering a versatile solution for enhancing battery safety.

According to a second aspect, there is provided a vehicle comprising a battery housing according to any of the above examples. A technical benefit may include the application of this battery housing system in vehicular contexts, where the efficient management of thermal runaway is critical for safety. Integrating this system into vehicles ensures that the advancements in gas evacuation and thermal management directly contribute to the safety and reliability of electric vehicles.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary illustration of a battery housing according to an example.
**FIG. 2** is an exemplary illustration of details of a battery module according to an example.
**FIGS. 3A-B** are exemplary illustrations of details of a battery module for a battery housing according to an example.
**FIGS. 4A-B** are exemplary illustrations of gas flow in example battery housings.
**FIG. 5** is an exemplary illustration of a vehicle comprising a battery housing according to an example.

### DETAILED DESCRIPTION

The detailed description set forth below provides information and examples of the disclosed technology with sufficient detail to enable those skilled in the art to practice the disclosure.

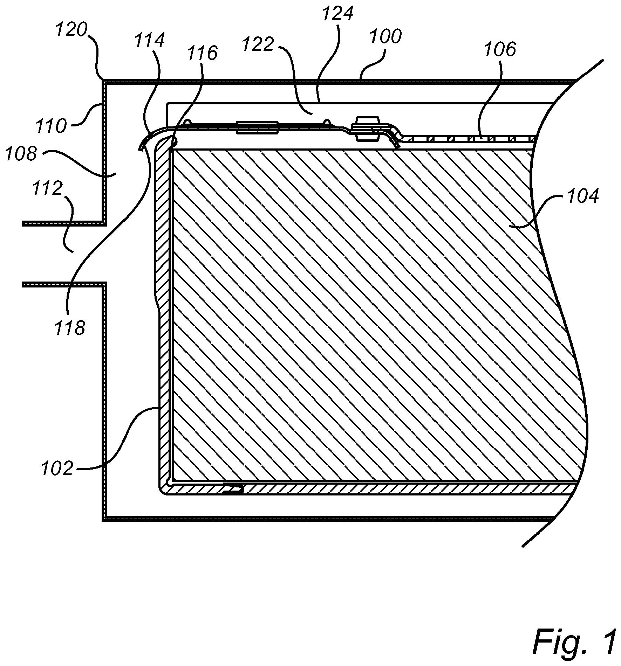

FIG. 1 is an exemplary illustration of a battery housing 100 comprising a battery module 102 comprising at least one battery cell 104. A battery module 102 is a unit typically composed of a plurality of battery cells assembled together. A battery module 102 is thereby a component of a battery system and may further comprise connectors and other components required for operating the battery system. In the present context, the battery module may comprise a plurality of prismatic battery cells 104 in a stacked arrangement where FIG. 1 illustrates a cross section of a cell 104. The battery housing 100 is arranged and configured to enclose the battery module 102 to thereby protect and facilitate arranging the battery module 102 in a vehicle.

FIG. 1 further illustrates that the battery cell comprises a vent 106 for venting gas in case of thermal runaway. The vent 106 is for example a breakable vent configured to form an outlet when subjected to sufficient pressure from gas from the battery cell 104 in case of a thermal runaway event. The vent 106 leads to a vent channel 108 located between the battery module and an outer wall 110 of the battery housing where the vent channel 108 is configured to fluidly connect the vent 106 to an opening 112 in the outer wall 110 of the battery housing 100. Gas ejected from the vent 106 is first guided in a passage 122 between the battery module 102 and an upper cover plate 124 of the battery module 102. This passage 122 could also be seen as part of the vent channel 108, and it should be noted that a passage for gas flow out of the battery module 102 also could be formed by other structural parts of the battery module 102. The passage 122 of the battery module 102 leads to an opening, or slit, in the battery module 102 where a gas flow can leave the battery module 102.

The battery housing 100 further comprises a curved convex surface 114 located in the vent channel 108 between the vent 106 and the opening 112 of the sidewall 110 of the battery housing 100, wherein the curved convex surface 114 is configured to invoke the Coanda effect in a gas flowing past the curved convex surface 114. The curved convex surface 114 can be provided as a separate structure or as part of another structural element within the battery housing.

The Coanda effect is a physical principle that describes the tendency of a fluid jet to stay attached to a nearby surface and to follow its contour. When a fluid (which in the present context is a gas) flows over a curved surface, it tends to stick to the surface instead of flowing straight off. This happens due to a difference in pressure that is created when the fluid moving along the surface reduces in velocity relative to the fluid that is moving away from the surface, leading to a pressure difference. The higher pressure on the outside pushes the fluid towards the surface, causing it to follow the curve of the surface. By arranging a curved convex surface 114 in the vent channel 108, the direction of the gas flow can be controlled without impeding the gas flow.

In the example illustrated in FIG. 1, the curved convex surface 114 is located at an edge 116 of the battery module 102 and to extend outside of the edge 116 of the battery module 102. In particular, the curved convex surface 114 is formed by a ledge 118 arranged on the battery module 102 and extending outside of an edge 116 of the battery module 102. It should be noted that other configurations and designs of a curved convex surface also could be used to the same effect. Moreover, even though the described example illustrates one curved convex surface in the flow path between the battery cell vent 106 and the opening 112 of the battery housing 100, it would equally well be possible to arrange a plurality of curved convex surface at multiple locations along the flow path to further control and guide a gas flow.

As further seen in Fig. 1, the curved convex surface 114 is located at an upper portion of the battery module 102, and the opening 112 of the battery housing 100 is located vertically below the curved convex surface 114 so that the vent channel 108 forms a curved path from the vent 106 of the battery cell 104 to the opening 112 of the battery housing 100. By guiding the gas along the sidewall 110 of the housing, there is a reduced risk of hot spots at the sidewall 110 of the battery housing 100 at the point where gas is ejected from the battery module 102. The gas flow thereby in principle passes the upper inner corner 120 of the battery housing 100, but is at the same time guided away from the upper inner corner 120.

Moreover, the curved convex surface 114 may be made from or comprise a plastic material with high thermal resistance, a metal, or a composite material. The material of the curved convex surface should be selected to not deform when subjected to the thermal load from the heated gas during thermal runaway. To further enhance the Coanda effect, the curved convex surface 114 may have a certain predefined surface roughness, for example provided by a coating. The surface roughness preferable has an average roughness below 0.1 mm which is approximately the median size of particles in an exhaust gas from thermal runaway.

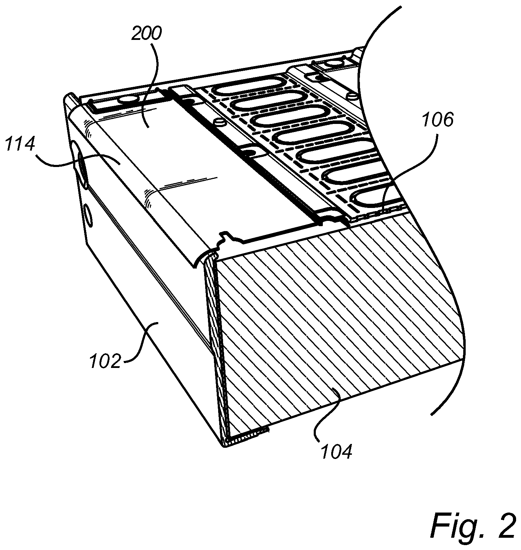

FIG. 2 is a perspective view of part of the battery module 102 where the battery cell vent 106 and the curved convex surface 114 are clearly illustrated. In the illustrated example, the curved convex surface 114 is part of busbar cover structure 200 arranged to cover a busbar of the battery module 102.

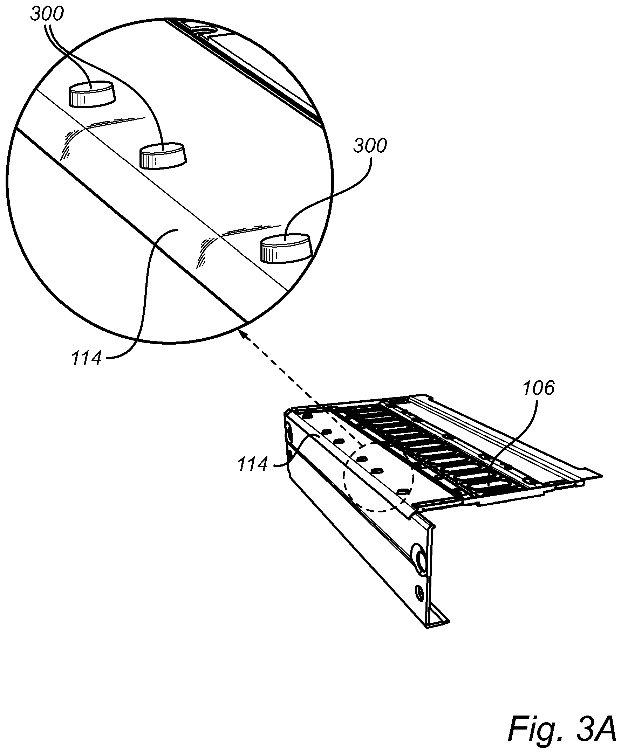

**FIGS. 3A-B** schematically illustrate details of the battery module 102 where the vent channel 108 further comprises a vortex generator 300, 302 located in the vent channel prior to the curved convex surface so that a gas flow passes the vortex generator before reaching the curved convex surface 114. In FIG. 3A, the vortex generator is provided in the form of protruding elements 300 arranged in flow path of gas prior to the curved convex surface 114 so that a vortex in the gas flow is formed which in turn further enhances the Coanda effect. A height of the protruding elements may be approximately similar to a maximum particle size ejected from the battery cell 104 in case of thermal runaway, for example in the range of 0.1 mm to 4 mm.

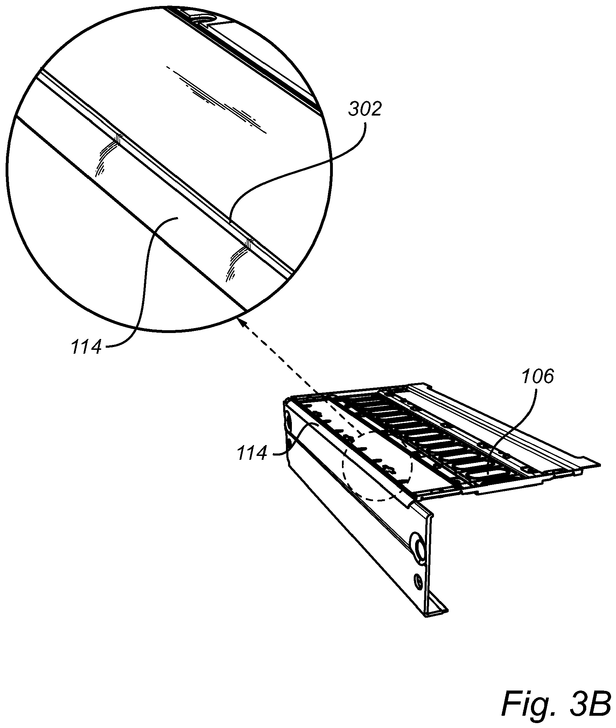

In FIG. 3B, the vortex generator is provided in the form of a ridge 302 located prior to the curved convex surface 114 and arranged transversally to a gas flow direction. In particular, the ridge is located adjacent to the curved convex surface 114 so that a vortex in the gas flow is formed adjacent to the curved convex surface 114. Arranging a small step or a ridge in path of the gas flow for forming a vortex may also facilitate particle collection from the gas. The height of the ridge can be optimized based on proportions of the battery module 102 and battery housing 100 to provide the desired amount of turbulence. For example, a ridge arranged at the adjacent to the curved convex surface 114 could have a height which is approximately similar to the height of the passage illustrated 122 in Fig. 1, or a height similar to the height of an opening of the passage 122 but without blocking the passage 122, to thereby develop a low pressure vortex below the point where the gas exits the battery module 102.

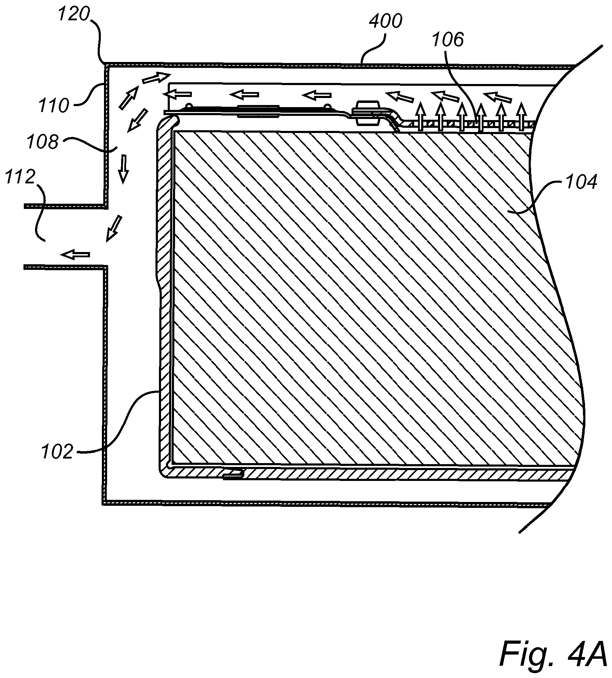

**FIGS. 4A-B** schematically illustrate the difference in gas flow with and without a curved convex surface 114 located in the vent channel. FIG. 4A illustrates a battery housing 400 where there is not a curved convex surface a in the vent channel 108. The gas flow, schematically illustrated by arrows, thereby directly impinges on an outer sidewall 110 of the housing 400 where a hotspot may be created, potentially damaging the housing 400. Moreover, the gas may flow upwards past the upper inner corner 120 of the housing and back towards the battery cell 104.

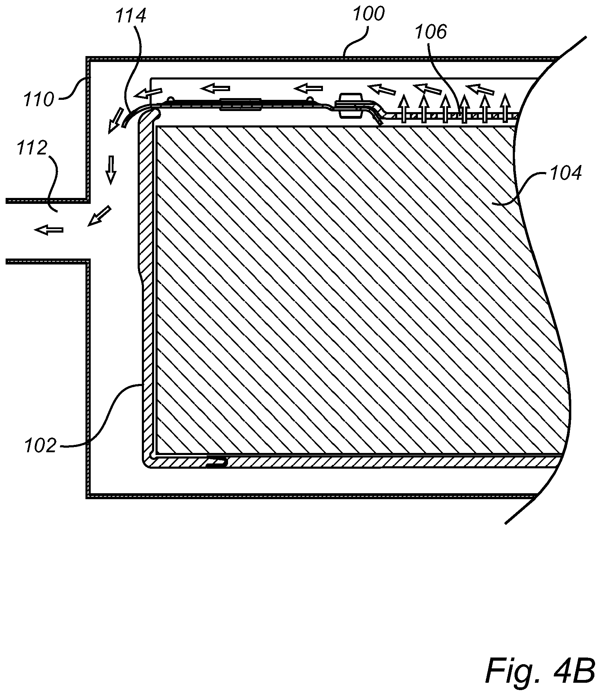

In comparison, FIG. 4B illustrates the battery housing 100 comprising a curved convex surface 114 guiding the gas flow downwards towards the opening 112 of the housing 400, improving control of the gas flow and reducing the risk of hotspots and backflow of the gas.

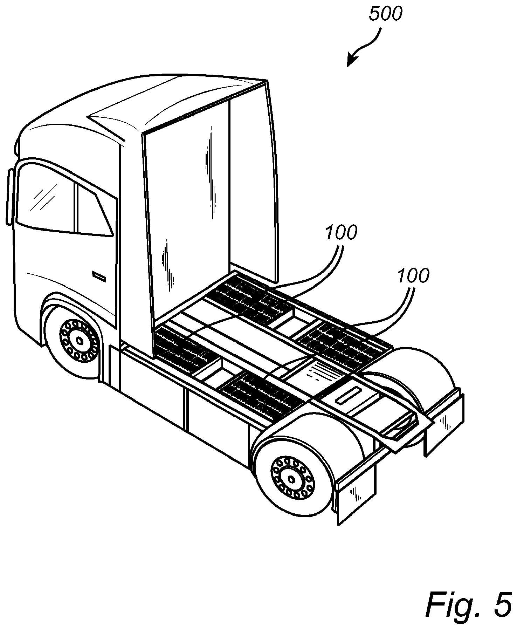

FIG. 5 schematically illustrates a vehicle 500 comprising battery modules 100 according to the above described examples.

Example 1. A battery housing (100) comprising: a battery module (102) comprising at least one battery cell (104), the battery cell having a vent (106) for venting gas in case of thermal runaway; a vent channel (108) located between the battery module and an outer wall (110) of the battery housing and configured to fluidly connect the vent to an opening (112) in the outer wall of the battery housing; and a curved convex surface (114) located in the vent channel between the vent and the opening, wherein the curved convex surface is configured to invoke the Coanda effect in a gas flowing past the curved convex surface.

Example 2. The battery housing according to example 1, wherein the curved convex surface is located at an edge (116) of the battery module.

Example 3. The battery housing according to example 1 or 2, wherein the curved convex surface extends outside of an edge (116) of the battery module.

Example 4. The battery housing according to example 1, wherein the curved convex surface is formed by a ledge (118) arranged on the battery housing and extending outside of an edge of the battery module.

Example 5. The battery housing according any one of the preceding examples, wherein the curved convex surface is located at an upper portion of the battery module, and wherein the opening of the battery housing is located vertically below the curved convex surface so that the vent channel forms a curved path from the vent of the battery cell to the opening of the battery housing.

Example 6. The battery housing according any one of the preceding examples, wherein the vent channel passes an upper inner corner (120) of the battery housing.

Example 7. The battery housing according any one of the preceding examples, wherein the curved convex surface is part of busbar cover structure (200) arranged to cover a busbar of the battery module.

Example 8. The battery housing according to any one of the preceding examples, wherein the vent channel further comprises a vortex generator (300, 302) located in the vent channel prior to the curved convex surface so that a gas flow passes the vortex generator before reaching the curved convex surface.

Example 9. The battery housing according to example 8, wherein the vortex generator comprises protruding elements (300) in the vent channel.

Example 10. The battery housing according to example 9, wherein a height of the protruding elements is approximately similar to a maximum particle size ejected from the battery cell in case of thermal runaway.

Example 11. The battery housing according to example 9, wherein a height of the protruding elements is in the range of 0.1 mm to 4 mm.

Example 12. The battery housing according to any one of the preceding examples, further comprising a ridge (302) located prior to the curved convex surface and arranged transversally to a gas flow direction.

Example 13. The battery housing according to example 12, wherein the ridge is located adjacent to the curved convex surface.

Example 14. The battery housing according to any one of the preceding examples, wherein the curved convex surface is made from a plastic material with high thermal resistance.

Example 15. The battery housing according to any one of examples 1 to 13, wherein the curved convex surface is made from metal.

Example 16. The battery housing according to any one of examples 1 to 13, wherein the curved convex surface is made from a composite material.

Example 17. The battery housing according to any one of the preceding examples, wherein the curved convex surface has a surface roughness configured to enhance the Coanda effect.

Example 18. The battery housing according to example 17, wherein an average surface roughness is below 0.1 mm.

Example 19. The battery housing according to any one of the preceding examples, wherein the battery module comprises a plurality of prismatic battery cells in a stacked arrangement.

Example 20. A vehicle comprising a battery housing according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery housing (100) comprising:
a battery module (102) comprising at least one battery cell (104), the battery cell having a vent (106) for venting gas in case of thermal runaway;
a vent channel (108) located between the battery module and an outer wall (110) of the battery housing and configured to fluidly connect the vent to an opening (112) in the outer wall of the battery housing; and
a curved convex surface (114) located in the vent channel between the vent and the opening, wherein the curved convex surface is configured to invoke the Coanda effect in a gas flowing past the curved convex surface.

2. The battery housing according to claim 1, wherein the curved convex surface is located at an edge (116) of the battery module.

3. The battery housing according to claim 1 or 2, wherein the curved convex surface extends outside of an edge (116) of the battery module.

4. The battery housing according to claim 1, wherein the curved convex surface is formed by a ledge (118) arranged on the battery housing and extending outside of an edge of the battery module.

5. The battery housing according any one of the preceding claims, wherein the curved convex surface is located at an upper portion of the battery module, and wherein the opening of the battery housing is located vertically below the curved convex surface so that the vent channel forms a curved path from the vent of the battery cell to the opening of the battery housing.

6. The battery housing according any one of the preceding claims, wherein the curved convex surface is part of busbar cover structure (200) arranged to cover a busbar of the battery module.

7. The battery housing according to any one of the preceding claims, wherein the vent channel further comprises a vortex generator (300, 302) located in the vent channel prior to the curved convex surface so that a gas flow passes the vortex generator before reaching the curved convex surface.

8. The battery housing according to claim 7, wherein the vortex generator comprises protruding elements (300) in the vent channel.

9. The battery housing according to claim 8, wherein a height of the protruding elements is approximately similar to a maximum particle size ejected from the battery cell in case of thermal runaway.

10. The battery housing according to claim 8, wherein a height of the protruding elements is in the range of 0.1 mm to 4 mm.

11. The battery housing according to any one of the preceding claims, further comprising a ridge (302) located prior to the curved convex surface and arranged transversally to a gas flow direction.

12. The battery housing according to claim 11, wherein the ridge is located adjacent to the curved convex surface.

13. The battery housing according to any one of the preceding claims, wherein the curved convex surface is made from a plastic material with high thermal resistance.

14. The battery housing according to any one of the preceding claims, wherein the curved convex surface has a surface roughness configured to enhance the Coanda effect.

15. A vehicle comprising a battery housing according to any one of the preceding claims.
